(19)

Europäisches Patentamt
European Patent Office
Office européen des brevets

(11) **EP 3 213 916 A1**

(12) **EUROPEAN PATENT APPLICATION**
published in accordance with Art. 153(4) EPC

(43) Date of publication:
**06.09.2017 Bulletin 2017/36**

(21) Application number: **15854298.5**

(22) Date of filing: **11.08.2015**

(51) Int Cl.:
**B32B 27/40** (2006.01)    **B32B 5/28** (2006.01)
**C08J 5/04** (2006.01)

(86) International application number:
**PCT/JP2015/072802**

(87) International publication number:
**WO 2016/067711 (06.05.2016 Gazette 2016/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.10.2014   JP 2014219963**

(71) Applicants:
• **Kazama, Hitoshi**
  **Sakado-shi, Saitama 350-0233 (JP)**

• **Sumida, Atushi**
  **Setagaya-ku, Tokyo 154-0002 (JP)**

(72) Inventors:
• **Kazama, Hitoshi**
  **Sakado-shi, Saitama 350-0233 (JP)**
• **Sumida, Atushi**
  **Setagaya-ku, Tokyo 154-0002 (JP)**

(74) Representative: **Plougmann Vingtoft a/s**
  **Rued Langgaards Vej 8**
  **2300 Copenhagen S (DK)**

(54) **FIBER-REINFORCED COMPOSITE MATERIAL AND METHOD FOR MANUFACTURING SAME**

(57)    The object of the present invention is to prevent the void formation and to improve the mechanical properties such as the strength and the modulus of elasticity in the fiber-reinforced composite material, which contains a thermoplastic resin as a matrix resin and which is formed using reinforcing fibers, in particular, a sheet of a fiber substrate such as a woven fabric of reinforcing fibers, or a yarn bundle of a fiber substrate of reinforcing fibers. Means for solving the problem is a fiber-reinforced composite material which is composed of a resin-laminated substrate, comprising: a resin-filled substrate formed by filling spaces between fibers in a sheet or a strand of a fiber substrate with a thermoplastic polyurethane filler; and a matrix resin layer composed of a thermoplastic resin, which is disposed on the surface of the resin-filled substrate; wherein the added amount of the thermoplastic polyurethane filler to the fiber substrate is from 10 to 30 vol% with respect to the volume of the fiber substrate.

FIG. 1

**Description**

FIELD OF THE INVENTION

The present invention relates to a fiber-reinforced composite material containing a thermoplastic resin as a matrix resin, and to a method for producing the same.

BACKGROUND ART

Conventionally, fiber-reinforced composite materials obtained by adding carbon fibers or glass fibers to a synthetic resin are used for improving properties such as the tensile strength of synthetic resin products. As the matrix resin for the fiber-reinforced composite material, thermosetting resins such as epoxy resins have been mainly used (see Patent Document 1).

However, when a thermosetting resin is used as the matrix resin, the fiber-reinforced composite material is formed by a chemical reaction (curing reaction) of the thermosetting resin. Thus, there is a problem that it takes long time to cure the thermosetting resin and to form the fiber-reinforced composite material, which results in decreasing the productivity. There is a problem that the intermediate products of the fiber-reinforced composite material using the thermosetting resin as the matrix resin is difficult to be reprocessed by pressing, for example. Further, there is a problem that the used fiber-reinforced composite material is difficult to be recycled when the thermosetting resin is used as the matrix resin.

On the other hand, when a thermoplastic resin is used, the fiber-reinforced composite material is formed without a chemical reaction (curing reaction), which is different from the case of using the thermosetting resin. There are advantages that the time required for forming the fiber-reinforced composite material is decreased, that the intermediate formed products can be laminated and heated under pressure to form it into any shape, and that the fiber-reinforced composite material can be melted to easily form it into any shape. Therefore, thermoplastic resins have been gradually used as the matrix resin of the fiber-reinforced composite material.

When the thermoplastic resin is used as the matrix resin of the fiber-reinforced composite material, since the thermoplastic resin has poor affinity to the fiber and the strength of the fiber-reinforced composite material is low, techniques for treating the surface of the fiber with a fiber binder or a sizing agent are proposed to improve the affinity of the thermoplastic resin and the fiber (Patent Documents 2 to 4).

Conventionally, for forming the fiber-reinforced composite material containing the thermoplastic resin, it is a general method that reinforcing fibers are cut into short fibers having a length of about 10 mm or less, that the short fibers are mixed with pellets of the thermoplastic resin, that the mixture is extruded by an extruder to form it in a metal mold. However, when using the method and materials, since the reinforcing fibers are broken into smaller pieces in the extruder and are oriented randomly, the strength and the modulus of elasticity of the reinforcing fibers cannot efficiently be utilized for the fiber-reinforced composite material. For utilizing properties of the reinforcing fibers efficiently, continuous long fibers are preferably used as the reinforcing material, and a resin is applied to a substrate containing the continuous long fibers to form a fiber-reinforced composite material.

Another factor other than the affinity of the matrix resin and the fiber, which influences properties of the fiber-reinforced composite material, is an amount of gap (void) inside the fiber-reinforced composite material. Decreasing the amount of void is preferred because lower amount of void can increase properties such as tensile strength. However, the reinforcing fibers used in the fiber-reinforced composite material has a shape of a yarn bundle containing from several thousands to several tens of thousands of single yarns having a diameter of about 5 to 10 $\mu$m. When the viscosity of the resin used for the molding is high, it is difficult to fill gaps between single yarns of the yarn bundle or between the yarn bundles with the resin. Therefore, since many voids are generated, it is difficult to produce a fiber-reinforced composite material having improved mechanical properties.

When the thermoplastic resin is used, since the melting viscosity of the thermoplastic resin is higher than the viscosity of the thermosetting resin before curing, it is difficult to fill gaps between single yarns or between the yarn bundles with the resin completely. In particular, when a woven fabric substrate of fiber bundles or a substrate of fiber bundles having continuous long fibers are used as the reinforcing material, it is difficult to produce a fiber-reinforced composite material having no voids.

The technology as described in Patent Document 1 is a technology that a sizing agent is produced from an epoxy resin (thermosetting resin) having a viscosity of more than 1,000 poises and not more than 20,000 poises at 50°C and an urethane compound having hydroxyl groups obtained from a polyol having oxyalkylene units and a polyisocyanate, and that carbon fibers are treated with the sizing agent. The Patent Document 1 discloses carbon fibers in which the added amount of the sizing agent is from 0.1 to 10 wt% with respect to the solid content. However, it is difficult to produce fiber-reinforced composite materials having no voids because the amount of the sizing agent is not sufficient to completely fill gaps between single yarns of a yarn bundle or between the yarn bundles composed of continuous long fibers.

The inventions as described in Patent Documents 2, 3 and 4 are technologies that a modified polyolefin is applied to a bundle of continuous fibers as a fiber binder to improve the affinity of the thermoplastic resin as the matrix resin and the fibers.

PRIOR ART DOCUMENTS

PATENT DOCUMENTS

Patent Document 1: JP 05-132863 A
Patent Document 2: JP 2006-124847 A
Patent Document 3: JP 2011-21281 A
Patent Document 4: JP 2011-214175 A

SUMMARY OF THE INVENTION

PROBLEMS TO BE SOLVED BY THE INVENTION

As described above, in the technology as described in Patent Document 1, it is difficult to produce fiber-reinforced composite materials having no voids because the added amount of the sizing agent is from 0.1 to 10 wt% with respect to the solid content and the amount is not sufficient to completely fill gaps between single yarns of a yarn bundle or between the yarn bundles composed of continuous long fibers. In the technologies as described in Patent Documents 2, 3 and 4, the binder only connects between single yarns by point contact and it is difficult to produce fiber-reinforced composite materials having no voids because the added amount of the fiber binder is from 0.1 to 10 mass% with respect to the mass of the fibers and the amount is not sufficient to completely fill gaps between single yarns. Further, since the modified polyolefin cures by heat during drying process, the modified polyolefin could not be applied to the fiber substrate for the continuous fiber-reinforced composite material containing the thermoplastic resin as the matrix.

However, because of the advantages of the thermoplastic resin, there is a strong need that the fiber-reinforced composite material containing the thermoplastic resin as the matrix resin is applied as means for weight reduction of automobiles or the like.

Accordingly, an object of the present invention is to prevent the void formation and to improve the mechanical properties such as the strength and the modulus of elasticity in the fiber-reinforced composite material, which contains a thermoplastic resin as a matrix resin and which is formed using reinforcing fibers.

MEANS FOR SOLVING THE PROBLEMS

One aspect of the present invention as means for solving the problems is a resin-laminated substrate, comprising: a resin-filled substrate formed by filling spaces between fibers in a fiber substrate with a thermoplastic polyurethane filler; and a matrix resin layer composed of a thermoplastic resin, which is disposed on the surface of the resin-filled substrate; wherein the added amount of the thermoplastic polyurethane filler to the fiber substrate is from 10 to 30 vol% with respect to the volume of the fiber substrate.

Another aspect of the invention is a resin-laminated substrate, comprising: a sheet of a resin-filled substrate formed by filling spaces between fibers in a sheet of a fiber substrate with a thermoplastic polyurethane filler; and a matrix resin composed of a thermoplastic resin, which is laminated on the sheet of the resin-filled substrate; wherein the added amount of the thermoplastic polyurethane filler to the fiber substrate is from 10 to 30 vol% with respect to the volume of the fiber substrate.

Another aspect of the invention is a resin-laminated substrate, comprising: a strand of a resin-filled substrate formed by filling spaces between fibers in a yarn bundle of a fiber substrate with a thermoplastic polyurethane filler; and a matrix resin layer composed of a thermoplastic resin, which is disposed on the surface of the strand of the resin-filled substrate; wherein the added amount of the thermoplastic polyurethane filler to the fiber substrate is from 10 to 30 vol% with respect to the volume of the fiber substrate.

And, another aspect of the invention is a fiber-reinforced composite material formed by using the above-mentioned resin-laminated substrate.

Further, another aspect of the invention is a method for producing a resin-laminated substrate, comprising: applying an aqueous resin dispersion to a fiber substrate, the aqueous resin dispersion being obtained by dispersing thermoplastic polyurethane filler particles in an aqueous medium; removing the aqueous medium by drying process to form a resin-filled substrate, the fiber substrate being filled with the thermoplastic polyurethane filler by filling spaces between fibers in the fiber substrate with the thermoplastic polyurethane filler particles in an amount of 10 to 30 vol% with respect to the volume of the fiber substrate; and stacking a matrix resin layer on the surface of the resin-filled substrate to form an integrated article of the resin-filled substrate and the matrix resin.

Another aspect of the invention is a method for producing a resin-laminated substrate, comprising: applying an aqueous resin dispersion to a sheet of a fiber substrate, the aqueous resin dispersion being obtained by dispersing thermoplastic polyurethane filler particles in an aqueous medium; removing the aqueous medium by drying process to form a resin-filled substrate, the fiber substrate being filled with the thermoplastic polyurethane filler by filling spaces between fibers in the fiber substrate with the thermoplastic polyurethane filler particles in an amount of 10 to 30 vol% with respect to the volume of the fiber substrate; and laminating the resin-filled substrate and a matrix resin and heating it under pressure to form an integrated article of the resin-filled substrate and the matrix resin.

Another aspect of the invention is a method for producing a resin-laminated substrate, comprising: applying an aqueous resin dispersion to a yarn bundle of a fiber substrate, the aqueous resin dispersion being obtained by dispersing thermoplastic polyurethane filler particles in an aqueous medium; removing the aqueous medium by drying process to form a strand of a resin-filled substrate, the fiber substrate being filled with the thermoplastic polyurethane filler by filling spaces between fibers in the fiber substrate with the thermoplastic polyurethane filler particles in an amount of 10 to 30 vol% with respect to the volume of the fiber substrate; and coating the surface of the strand of the resin-filled substrate with a matrix resin to form an integrated article of the resin-filled substrate and the matrix resin.

And, another aspect of the invention is a method for producing a fiber-reinforced composite material, comprising: laminating or aligning the resin-laminated substrate formed by the above-mentioned method for producing a resin-laminated substrate; and heating it under pressure to concurrently form it into any shape.

EFFECT OF THE INVENTION

According to the present invention as described above, spaces between fibers can be filled with a synthetic resin tightly. Void formation can be prevented in the fiber-reinforced composite material containing a thermoplastic resin as a matrix resin which is formed using reinforcing fibers, and the mechanical properties such as the strength and the stiffness of the fiber-reinforced composite material can be improved.

Further, the fiber-reinforced composite material can be formed in a short period of time. Additionally, the fiber-reinforced composite material having high shape flexibility can be obtained at low price. Since a thermoplastic resin is used as a matrix resin in this fiber-reinforced composite material, the material can be reformed into a desired shape by re-heating it, and can be milled, pelletized, and reformed by injection forming, by which the material is easily recycled. By utilizing the properties of the fiber-reinforced composite material for the vehicle bodies such as automobiles or airplanes, the weight reduction of the vehicle such as automobiles and the improvement of the fuel consumption can be accomplished.

Since the thermoplastic resin is not chemically reacted, the resin can be immersed between fibers in a short period time. Therefore, the forming cycle of the fiber-reinforced composite material can be shortened and the productivity is increased, by which the cost can be decreased.

BRIEF DESCRIPTION OF DRAWINGS

FIG. 1 is a graph showing bending load-displacement properties of a sheet of a fiber composite material containing a sheet of a carbon fiber substrate to which a polyurethane is applied and a polypropylene therein as a matrix resin.

FIG. 2 is a graph showing a comparison between bending load-displacement properties of a sheet of a carbon fiber composite material containing an epoxy resin as a matrix resin and a sheet of a carbon fiber composite material containing a polypropylene as a matrix resin.

FIG. 3 is a graph showing bending load-displacement properties of a sheet of a fiber composite material containing a sheet of an aramid fiber substrate to which a polyurethane is applied and a polypropylene therein as a matrix resin.

FIG. 4 is a graph showing a comparison between bending load-displacement properties of a sheet of an aramid fiber composite material containing an epoxy resin as a matrix resin and a sheet of an aramid fiber composite material containing a polypropylene as a matrix resin.

FIG. 5 is a graph showing bending load-displacement properties of a sheet of a fiber composite material containing a sheet of a glass fiber substrate to which a polyurethane is applied and a polypropylene therein as a matrix resin.

FIG. 6 is a graph showing a comparison between bending load-displacement properties of a sheet of a glass fiber composite material containing an epoxy resin as a matrix resin and a sheet of a glass fiber composite material containing a polypropylene as a matrix resin.

FIG. 7 is a graph showing a comparison between bending load-displacement properties of a strand of a carbon fiber composite material containing an epoxy resin as a matrix resin and a strand of a carbon fiber composite material containing a polypropylene as a matrix resin.

FIG. 8 is a graph showing a comparison between bending load-displacement properties of a strand of an aramid fiber composite material containing an epoxy resin as a matrix resin and a strand of an aramid fiber composite material containing a polypropylene as a matrix resin.

FIG. 9 is a graph showing a comparison between bending load-displacement properties of a strand of a glass fiber composite material containing an epoxy resin as a matrix resin and a strand of a glass fiber composite material containing a polypropylene as a matrix resin.

## MODE FOR CARRYING OUT THE INVENTION

Hereinafter, embodiments of the present invention will be described. The fiber-reinforced composite material of the present invention is composed of a resin-laminated substrate, which contains: a resin-filled substrate formed by filling spaces between fibers in a fiber substrate with a thermoplastic polyurethane filler; and a matrix resin layer composed of a thermoplastic resin, which is disposed on the surface of the resin-filled substrate; wherein the added amount of the thermoplastic polyurethane filler to the fiber substrate is from 10 to 30 vol% with respect to the volume of the fiber substrate.

More specifically, the fiber-reinforced composite material can be formed into a desired shape by directly using a resin-laminated substrate or by laminating it, in which the resin-laminated substrate contains: a sheet of a resin-filled substrate formed by filling spaces between fibers in a sheet of a fiber substrate with a thermoplastic polyurethane filler; and a matrix resin later composed of a thermoplastic resin, which is laminated on the sheet of the resin-filled substrate; wherein the added amount of the thermoplastic polyurethane filler to the fiber substrate is from 10 to 30 vol% with respect to the volume of the fiber substrate. The term "between fibers" means between single yarns and between yarn bundles of single yarns.

Alternatively, the fiber-reinforced composite material can be produced into a desired shape by aligning a resin-laminated substrate or by additionally laminating it, in which the resin-laminated substrate contains: a strand of a resin-filled substrate formed by filling spaces between fibers in a yarn bundle of a fiber substrate with a thermoplastic polyurethane filler; and a matrix resin layer composed of a thermoplastic resin, which is disposed on the surface of the strand of the resin-filled substrate; wherein the added amount of the thermoplastic polyurethane filler to the fiber substrate is from 10 to 30 vol% with respect to the volume of the fiber substrate.

The fiber substrate is a backbone moiety of the fiber-reinforced composite material formed by using fibers for reinforcing synthetic resins, and is in a shape of a sheet or a yarn bundle. The fiber and the fiber substrate is for reinforcing the matrix resin of the thermoplastic resin. The yarn bundle containing thousands or tens of thousands of single yarns can be used.

Examples of the sheet of the fiber substrate include knitted fabrics obtained by knitting a single yarn or a yarn bundle of a plurality of single yarns, woven fabrics obtained by weaving a single yarn or a yarn bundle, articles obtained by aligning single yarns or yarn bundles unidirectionally, and cord fabrics. One thick yarn bundle or a plurality of thick yarn bundles can be flattened to form a sheet of the fiber substrate.

When the fiber substrate is a knitted fabric, a woven fabric, or an article obtained by aligning single yarns or yarn bundles unidirectionally, continuous fibers extending from one end to the other end of the fiber substrate are preferably used for the fiber substrate. That is, continuous long fibers are preferably used for the reinforcing area of the fiber-reinforced composite material, but short fibers formed by shredding fibers such as chopped fibers are not used. The strength of the fiber-reinforced composite material can be improved by the structure.

Examples of the yarn bundle of the fiber substrate include yarn bundles obtained by bundling a plurality of single yarns and yarn bundles obtained by a plurality of the yarn bundles. Regarding the shape of the yarn bundle, the cross section can be circular, or the cross section can be rectangular or thin elliptic for forming it into thin plate shape. The thickness of the yarn bundle of the fiber substrate is not particularly limited.

The fiber as the reinforcing material for the thermoplastic resin is not particularly limited, but carbon fibers, aramid fibers, glass fibers, vinylon fibers, and PBO fibers can be used. The fiber can be used alone, or in combination with two or more. The diameter of the fiber is not particularly limited, but the fiber having a diameter of 5 to 10 $\mu$m can be used. The yarn bundle obtained by bundling single yarns is not particularly limited, but the yarn bundle obtained by bundling from 1,000 to 50,000 single yarns can be used. The yarn bundle of the fiber substrate can be a yarn bundle obtained by bundling from 1,000 to 50,000 single yarns, or a yarn bundle obtained by a plurality of the yarn bundles.

The thermoplastic resin filler is used for preventing the void formation in the fiber-reinforced composite material by filling spaces between fibers in a fiber substrate, and for improving the strength and the modulus of elasticity of the fiber-reinforced composite material. The thermoplastic resin filler is not particularly limited as long as it is a thermoplastic resin, but it is preferably a following synthetic resin. The thermoplastic resin filler is preferably capable of bonding between single yarns in a dry state and preferably has good film-forming properties. Further, the thermoplastic resin filler is preferably a thermoplastic resin having high adhesiveness to the thermoplastic resin used as the matrix of the resin-laminated substrate. The heat resistance of the thermoplastic resin filler is preferably as high as possible, and is preferably higher than that of the matrix resin of the resin-laminated substrate. Further, the thermoplastic resin filler is required to maintain the thermoplasticity after drying or curing in order to form one layer of the resin-laminated substrate or a plurality of layers of the resin-laminated substrate into any shape by laminating or aligning them.

The thermoplastic resin filler is preferably a thermoplastic polyurethane (hereinafter, sometimes referred to as "PU") because it has a sufficient thermoplasticity after drying or curing to easily reform a fiber-reinforced composite material having a flat plate shape into a product having a curved surface shape, for example.

The form of the thermoplastic resin filler is preferably an aqueous resin dispersion obtained by dispersing thermoplastic resin particles in an aqueous medium for filling spaces between fibers surely and homogeneously.

The diameter of the thermoplastic resin particles is not particularly limited, but the diameter can be from 0.01 to 1 $\mu$m for filling spaces between fibers completely. In order to fill spaces between fibers in a fiber substrate in a short period of time and homogeneously, the diameter is preferably one tenth of the diameter of the fiber or less. More specifically, since the diameter of the fiber is generally from 5 to 10 $\mu$m, the diameter of the thermoplastic resin particles is preferably 0.5 $\mu$m or less, is more preferably 0.1 $\mu$m or less, and is further preferably 0.03 $\mu$m or less.

The concentration of non-volatile components in the aqueous resin dispersion obtained by dispersing thermoplastic resin particles in water is not particularly limited. The viscosity of the dispersion is preferably low in order to easily spread the thermoplastic resin filler to spaces between single fibers and in order to fill the spaces completely. On the other hand, the concentration of the dispersion is preferably as thick as possible. Therefore, the mass ratio of the thermoplastic resin particles in the aqueous resin dispersion is preferably from 20 to 40 mass%, and is more preferably from 25 to 36 mass%.

When the thermoplastic resin filler is a PU, the polyol is not particularly limited, but polyether-based, polyester-based or polycarbonate-based polyols can be used. In particular, polyether-based polyols are preferred because a film having high heat resistance and high hardness can be formed.

The added amount of the thermoplastic polyurethane filler to the fiber substrate is preferably an amount which is capable of filling spaces between fibers in a fiber substrate as densely as possible. More preferably, the added amount is an amount more than that required to fill spaces between fibers in a fiber substrate completely. If the cross section of single yarns in the fiber bundle is considered as circular, and single yarns in the fiber bundle is in close-packed structure, the volume of spaces between single yarns is calculated using the following Equation 1:

$$\text{Equation 1: } 100 \times (3^{1/2} - \pi/2) \, / \, (\pi/2) = 10.2$$

Therefore, the thermoplastic resin filler can fill spaces between fibers in the fiber substrate completely by adding 10.2 vol% of the thermoplastic resin filler with respect to the volume of the bundle of fibers, that is the fiber substrate. The added amount of the thermoplastic resin filler to the fiber substrate can be from 10 to 37 vol% with respect to the volume of the fiber substrate, depending on the material of the fiber substrate, and is preferably from 10 to 30 vol%. If the added amount is over 30%, the economic efficiency is decreased and the mechanical properties of the fiber substrate may be decreased depending on the material of the fiber substrate.

However, in fact, it is preferable to coat the surface of single yarns with the thermoplastic resin filler as well as not to excessively coat the outer surface of the fiber bundle, that is the outer surface of the fiber substrate, to exert the original properties of the matrix resin and to obtain the fiber-reinforced composite material having no voids. For this purpose, the added amount of the thermoplastic resin filler to the fiber substrate is preferably equal to or more than the volume required to fill spaces between single yarns to be applied to the continuous fiber substrate, and is preferably from 11 to 30 vol% with respect to the volume of the fiber substrate.

When a carbon fiber is used as the fiber of the fiber substrate and when a thermoplastic polyurethane is used as the thermoplastic resin filler, the added amount of the thermoplastic polyurethane filler to the fiber substrate is preferably from 13 to 40 mass% with respect to the mass of the fiber substrate, and is more preferably from 15 to 30 mass%.

The method for filling spaces between fibers in the fiber substrate with the thermoplastic polyurethane filler during the formation of the resin-filled substrate is not particularly limited, but methods such as spraying, dipping, and immersion by using rollers, which are capable of homogeneously adding the required amount using the aqueous resin dispersion obtained by dispersing thermoplastic polyurethane filler particles in the aqueous medium, can be used. After adding the filling polyurethane to fibers of the fiber substrate, drying process is performed for removing the aqueous medium and other ingredients other than the thermoplastic resin filler in the aqueous resin dispersion. As the drying process, general methods such as the methods by contacting it with heat air or a drying roller, the methods by heating it with infrared light or sunshine, and the other heating methods can be applied. By this process, the thermoplastic polyurethane is applied to the surface of the fiber substrate.

By immersing the aqueous resin dispersion obtained by dispersing the thermoplastic resin particles in the aqueous medium in the fiber substrate, the thermoplastic resin filler is easily spread between single yarns and between yarn bundles and spaces between fibers can be filled with the thermoplastic resin completely, by which the void formation can be prevented.

When the fiber substrate is a yarn bundle of the fiber substrate, the yarn bundle of the fiber substrate may be filled with the thermoplastic polyurethane. When the fiber substrate is a sheet of the fiber substrate, the yarn bundle of the fiber substrate may be filled with the thermoplastic polyurethane and then knitted or woven the yarn bundle to form the sheet of the fiber substrate. Alternatively, after forming the sheet of the fiber substrate, the sheet of the fiber substrate may be filled with the thermoplastic polyurethane.

The thermoplastic resin used as the matrix resin is not particularly limited, but it is preferably a thermoplastic resin having high adhesiveness to the thermoplastic resin filler. The heat resistance of the thermoplastic resin used as the matrix resin is preferably as high as possible. The thermoplastic resin is preferably a synthetic resin which is melted at a temperature equal to or lower than the thermal decomposition temperature of the dried thermoplastic resin filler, depending on the producing method. More specifically, polyethylenes, polypropylenes (hereinafter, sometimes referred to as "PP"), polystyrenes, polyvinyl chlorides, nylons, polyethylene terephthalates, polybutylene terephthalates, ABSs, polycarbonates, polyethylene sulfides, and the like can be used.

The form of the matrix resin for producing the sheet of the resin-laminated substrate is not particularly limited, but is preferably a film, a flat plate, a woven fabric, a knitted fabric, or the like. The resin-laminated substrate can be easily produced with the form of the matrix resin. The added amount of the matrix resin (for example, the thickness of the film or the flat plate) is not particularly limited, and it can be determined according to the application of the fiber-reinforced composite material produced by the resin-laminated substrate.

The sheet of the resin-laminated substrate can have a structure in which the resin-filled substrate and the matrix resins are stacked and laminated and the resin-filled substrate is disposed between the matrix resins, but the laminating form of the resin-laminated substrate is not particularly limited. The sheet of the resin-laminated substrate can be a three-layered laminated structure in which two matrix resins are disposed on upper and lower surfaces of one resin-filled substrate, or a structure in which the matrix resins are disposed on upper and lower surfaces of a plurality of the resin-filled substrates.

The strand of the resin-laminated substrate can have a structure in which the resin-filled substrate is coated with the matrix resin formed by coating the strand of the resin-filled substrate with a matrix resin and by stacking the resin-filled substrate and the matrix resins, and in which the matrix resin is disposed on the surface of one strand of the resin-laminated substrate.

The content of the fibers and the content of the matrix resin in the fiber-reinforced composite material are not particularly limited, and they can be selected depending on the kind of the fiber, the form of the fiber substrate, the kind of the thermoplastic resin filler, the kind of the matrix resin, or the like, in order to produce the predetermined fiber-reinforced composite material.

Next, the method for producing the fiber-reinforced composite material with the sheet of the fiber substrate will be described. Firstly, a resin-filled substrate is produced with the method as described above. In a metal mold, the films of the matrix resin are disposed on upper and lower surfaces of the resin-filled substrate, that is the fiber substrate filled spaces between fibers with the thermoplastic polyurethane filler, to dispose the resin-filled substrate between the matrix resins. The matrix resin is then heated under pressure to melt the matrix resin. The matrix resin and the resin-filled substrate adhere to each other to produce the resin-laminated substrate.

When the resin-laminated substrate is produced by laminating a plurality of the resin-filled substrates and the matrix resins, the resin-laminated substrate can be produced by forming a three- or two-layered resin-laminated substrate in which the matrix resin is disposed on upper or lower surface or on upper and lower surfaces of one resin-filled substrate, further by laminating a plurality of the resin-laminated substrates in the metal mold, and by heating it at the temperature equal to or higher than the melting temperature of the matrix resin under pressure to melt the matrix resin and to make the matrix resin adhere to each other.

After that, the fiber-reinforced composite material is produced by disposing one resin-laminated substrate or by laminating and disposing a plurality of the resin-laminated substrates, by heating it under pressure to melt the matrix resin and to make the resin-filled substrate adhere to each other as well as to concurrently form it into any shape. Alternatively, the fiber-reinforced composite material can be produced by laminating the resin-filled substrate and the film of the matrix resin, by heating it under pressure to melt the matrix resin and to make the matrix resin and the resin-filled substrate adhere to each other as well as to concurrently form it into any shape.

In the method for producing the fiber-reinforced composite material using the yarn bundle of the fiber substrate, the long strand of the resin-filled substrate is firstly formed by the method as described above. The fiber-reinforced composite material is produced by continuously coating the strand of the resin-filled substrate with the heat-melted matrix resin by a known extrusion process, by cooling the matrix resin to make the matrix resin and the resin-filled substrate adhere to each other. In a metal mold, the fiber-reinforced composite material is produced by aligning a plurality of the resin-laminated substrates, more specifically by lining up, stacking or crossing a plurality of the resin-laminated substrates, or by disposing a plurality of the resin-laminated substrates in a combination of these processes, by heating it at the temperature equal to or higher than the melting temperature of the matrix resin under pressure to melt the matrix resin and to make the resin-filled substrates adhere to each other as well as to concurrently form it into any shape. When the strands of the resin-filled substrates are disposed in the metal mold, the strands may be aligned in a planer form, or vertically-disposed strands may be aligned in the same direction, or the upper row of vertically-disposed strands may be aligned in the direction different from the direction of the lower row of the strands. Conveniently, the yarn bundle of the resin-filled substrate is stored by winding. The yarn bundle of the resin-filled substrate is cut into pieces having a predetermined length for forming the fiber-reinforced composite material, as needed.

The sheet of the resin-laminated substrate may be formed by processing the strand of the resin-laminated substrate to woven fabrics or knitted fabrics.

The sheet of the resin-laminated substrate is suitable for producing the fiber-reinforced composite material in a planar form. The strand of the resin-laminated substrate is suitable for producing the fiber-reinforced composite material in a linear form.

EXAMPLES

The present invention will now be described in more detail by way of the following Examples. As a sheet of the fiber substrate, a plain weave carbon fiber fabric manufactured by Sakai Sangyo. co., Ltd (CF Carbon Cloth C06343, unit weight: 210 g/m$^2$), a plain weave glass fiber fabric manufactured by Sakai Sangyo. co., Ltd (GFATG25330, unit weight: 200 g/m$^2$), or a plain weave aramid fiber fabric manufactured by Sakai Sangyo. co., Ltd (unit weight: 200 g/m$^2$) was used. To 10 cm square piece of each fiber substrate, an aqueous polyurethane resin manufactured by DKS Co. Ltd. (SUPERFLEX 130, non-yellowing type, ether based, the average particle size: 0.03 $\mu$m) as the thermoplastic resin filler was added in a range of 10 to 37 vol% with respect to the volume of the fiber substrate, and was then dried with sunshine for 4 hours to form a resin-filled substrate. The dried film of SUPERFLEX 130 has a glass transition temperature of 101 °C, a softening temperature of 174°C, and a melting temperature of 216°C.

A plain metal mold was heated to 220°C, and a silicone release agent was applied to the plain metal mold. After that, polypropylene (PP) films having a unit weight of 175 g/m$^2$ were disposed on upper and lower surfaces of the resin-filled substrate in the plain metal mold, and it was then pressed and integrated at 180°C for 3 min at a pressure of 0.25 kg/cm$^2$ to form a fiber-reinforced composite material. Five pieces of the fiber-reinforced composite materials formed by the above-mentioned method were stacked, and then heated and pressed in the same condition to form a fiber-reinforced composite material having a thickness of about 2.5 mm (Examples 1 to 15).

As Comparative Examples, fiber-reinforced composite materials were produced under the same condition and the same shape as that in the Examples except that a fiber substrate without adding a PU was used (Comparative Examples 1, 3 and 5). Additionally, as other Comparative Examples, fiber-reinforced room temperature-curable composite materials were produced under the same condition and the same shape as that in the Examples except that a room temperature-curable epoxy resin (hereinafter, sometimes referred to as "EP") (ASAHIBOND 702 manufactured by Asahibond., Inc.) was immersed in a fiber substrate without adding a PU, and that it was cured at room temperature for 1 week (Comparative Examples 2, 4 and 6).

Each of these fiber-reinforced composite materials was cut with a diamond cutter to form a test sample having a width of 10 mm and a length of 80 mm, which was used for bending test according to ASTM 790 under the following measurement conditions.

    Crosshead speed: 10 mm/min
    Distance between spans: 50 mm

TABLE 1 shows bending load-displacement properties obtained by the bending test of carbon fiber woven fabric-reinforced composite material in which the above-mentioned carbon fiber plain woven fabric was used as the fiber substrate and in which the PP or the EP was used as the matrix resin. The numbers in the column "PU" are the volume percentage of the PU with respect to the fiber substrate.

TABLE 1

| | Comp. Ex. 1 | Example 1 | Example 2 | Example 3 | Example 4 | Example 5 | Comp. Ex. 2 |
|---|---|---|---|---|---|---|---|
| Resin | PP | | | | | | EP |
| PU | PU=0 | PU=13 | PU=23 | PU=27 | PU=13 | PU=37 | PU=0 |
| Displacement (mm) | Load (N) | | | | | | |
| 0.0 | 0 | 0 | 0 | 0 | 0 | 0 | 0 |
| 0.5 | 6 | 12 | 22 | 23 | 22 | 22 | 14 |
| 1.0 | 12 | 25 | 42 | 45 | 44 | 44 | 30 |
| 1.5 | 22 | 42 | 69 | 72 | 75 | 75 | 47 |
| 2.0 | 33 | 58 | 95 | 96 | 95 | 95 | 64 |
| 2.5 | 42 | 63 | 100 | 105 | 103 | 103 | 81 |
| 3.0 | 50 | 67 | 104 | 106 | 105 | 105 | 98 |
| 3.5 | 56 | 72 | 107 | 110 | 108 | 108 | 110 |
| 4.0 | 61 | 76 | 110 | 113 | 112 | 112 | 112 |
| 4.5 | 66 | 79 | 114 | 115 | 115 | 115 | 102 |
| 5.0 | 70 | 83 | 118 | 120 | 118 | 118 | 101 |
| 5.5 | 74 | 85 | 119 | 120 | 119 | 119 | 32 |
| 6.0 | 77 | 87 | 119 | 120 | 120 | 120 | 29 |
| 6.5 | 80 | 89 | 118 | 121 | 122 | 122 | 24 |
| 7.0 | 82 | 91 | 120 | 120 | 120 | 120 | 21 |
| 7.5 | 84 | 92 | 120 | 119 | 120 | 120 | 14 |
| 8.0 | 86 | 92 | 119 | 120 | 120 | 120 | 11 |

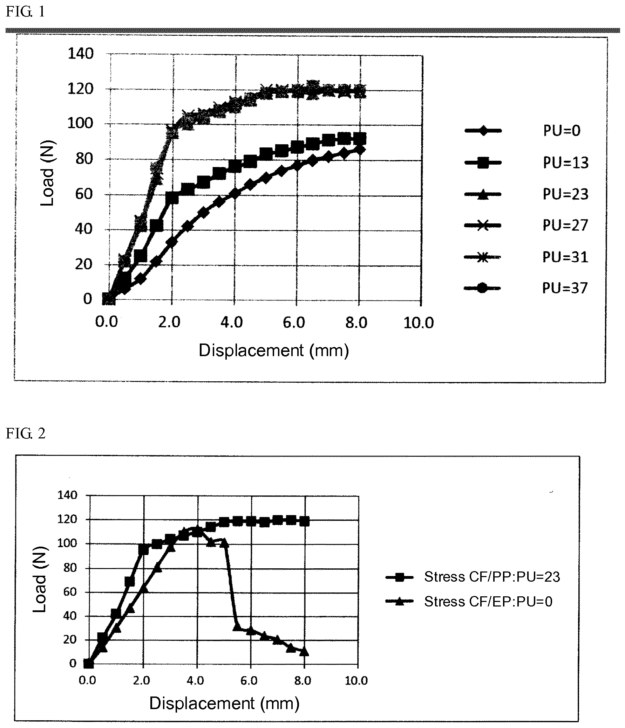

FIG. 1 is a graph showing bending load-displacement properties obtained by the above-mentioned bending test of the carbon fiber woven fabric composite material in which the carbon fiber was used as the fiber substrate and in which the PP was used as the matrix resin. As clearly shown in FIG. 1, by adding the PU, the bending load with respect to the displacement is increased, the linear region (modulus range) from zero point in a relationship of the bending load and the displacement becomes clear and long, and the composite material can resist the load after the maximum load is developed. That is, the fiber-reinforced composite materials containing the PP as the matrix resin show ductile fracture behavior. In particular, when the added amount of the PU is 13 vol% or more with respect to the volume of the fiber substrate, the composite material clearly shows the behavior. Further, when the added amount of the PU is 23 vol% or more, the composite material remarkably shows the behavior. Therefore, the added amount of the PU is preferably from 13 to 37 vol% with respect to the volume of the carbon fiber substrate, and is more preferably from 23 to 37 vol%.

FIG. 2 is a graph showing a comparison between bending load-displacement properties in the case of which the carbon fiber was used as the fiber substrate and in which the PP or the EP was used as the matrix resin. As clearly shown in FIG. 2, the fiber-reinforced composite material containing the PP with the predetermined amount of the PU as the matrix resin has almost the same fracture properties below the limit of elasticity as the corresponding material containing the EP as the matrix resin. When the load is over the maximum load, the load of the fiber-reinforced composite material containing the EP as the matrix resin is rapidly decreased (brittle fracture). In contrast, the fiber-reinforced composite material containing the PP as the matrix resin shows ductile fracture behaior, in which the load is gradually increased even when the load is over the limit of elasticity. It shows that the carbon fiber-reinforced composite material containing a polyurethane is a durable material that resists serious fracture, and that the material is an ideal constructional material.

TABLE 2 shows bending load-displacement properties obtained by the bending test of aramid fiber woven fabric-reinforced composite material in which the above-mentioned aramid fiber was used as the fiber substrate and in which the PP or the EP was used as the matrix resin. The numbers in the column "PU" are the volume percentage of the PU with respect to the fiber substrate.

TABLE 2

| | Comp. Ex. 3 | Example 6 | Example 7 | Example 8 | Example 9 | Example 10 | Comp. Ex. 4 |
|---|---|---|---|---|---|---|---|
| Resin | PP | | | | | | EP |
| PU | PU=0 | PU=11 | PU=13 | PU=23 | PU=27 | PU=32 | PU=0 |
| Displacement (mm) | Load (N) | | | | | | |
| 0.0 | 0 | 0 | 0 | 0 | 0 | 0 | 0 |
| 0.5 | 3 | 7 | 12 | 13 | 12 | 11 | 8 |
| 1.0 | 7 | 15 | 25 | 27 | 26 | 22 | 18 |
| 1.5 | 13 | 25 | 41 | 43 | 45 | 35 | 28 |
| 2.0 | 20 | 35 | 57 | 58 | 57 | 45 | 38 |
| 2.5 | 25 | 38 | 60 | 63 | 62 | 49 | 49 |
| 3.0 | 30 | 40 | 62 | 64 | 63 | 49 | 59 |
| 3.5 | 34 | 43 | 64 | 66 | 65 | 50 | 66 |
| 4.0 | 37 | 46 | 66 | 68 | 67 | 51 | 67 |
| 4.5 | 40 | 47 | 68 | 69 | 69 | 52 | 61 |
| 5.0 | 42 | 50 | 71 | 72 | 71 | 52 | 61 |
| 5.5 | 44 | 51 | 71 | 72 | 71 | 52 | 19 |
| 6.0 | 46 | 52 | 71 | 72 | 72 | 51 | 17 |
| 6.5 | 48 | 53 | 71 | 73 | 73 | 50 | 14 |
| 7.0 | 49 | 55 | 72 | 72 | 72 | 50 | 12 |
| 7.5 | 50 | 55 | 72 | 71 | 72 | 49 | 8 |
| 8.0 | 52 | 55 | 71 | 72 | 72 | 49 | 7 |

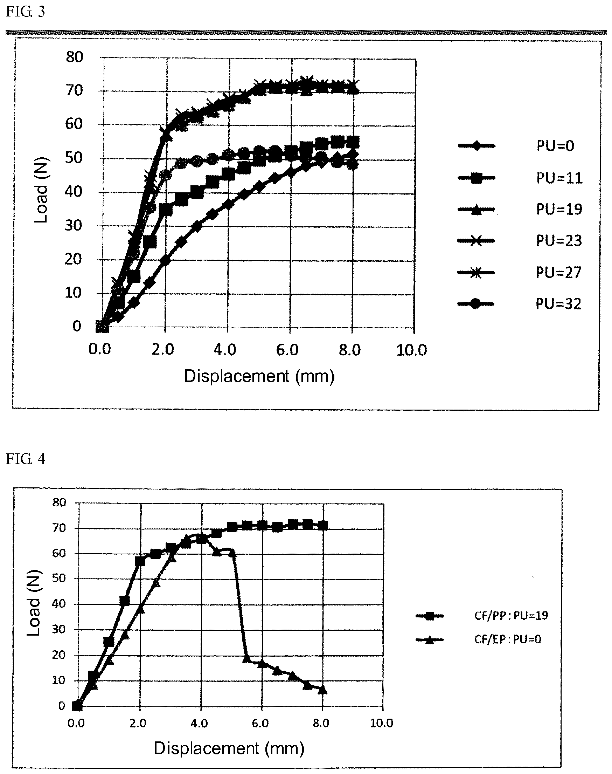

FIG. 3 is a graph showing bending load-displacement properties obtained by the above-mentioned bending test of the aramid fiber woven fabric composite material in which the aramid fiber was used as the fiber substrate and in which the PP was used as the matrix resin. As clearly shown in FIG. 3, by adding the PU, the bending load with respect to the displacement is increased, the linear region (modulus range) from zero point in a relationship of the bending load and the displacement becomes clear and long, and the composite material can resist the load after the maximum load is developed. That is, the fiber-reinforced composite materials containing the PP as the matrix resin show ductile fracture behavior. In particular, when the added amount of the PU is 11 vol% or more with respect to the volume of the fiber substrate, the composite material clearly shows the behavior. Further, when the added amount of the PU is 19 vol% or more, the composite material remarkably shows the behavior. Therefore, the added amount of the PU is preferably from 11 to 32 vol% with respect to the volume of the carbon fiber substrate, and is more preferably from 19 to 27 vol%. When the added amount of the PU is 32 vol% with respect to the volume of the aramid fiber substrate, the mechanical properties may be decreased in some conditions.

FIG. 4 is a graph showing a comparison between bending load-displacement properties in the case of which the aramid fiber was used as the fiber substrate and in which the PP or the EP was used as the matrix resin. As clearly shown in FIG. 4, the fiber-reinforced composite material containing the PP with the predetermined amount of the PU as the matrix resin has almost the same mechanical properties as the corresponding material containing the epoxy resin as the matrix resin. When the load is over the maximum load, the load of the fiber-reinforced composite material containing the EP as the matrix resin is rapidly decreased (brittle fracture). In contrast, the fiber-reinforced composite material containing the PP as the matrix resin shows ductile fracture behavior, in which the load is gradually increased even when the load is over the limit of elasticity.

TABLE 3 shows bending load-displacement properties obtained by the above-mentioned bending test of glass fiber woven fabric composite material in which the glass fiber was used as the fiber substrate and in which the PP or the EP was used as the matrix resin. The numbers in the column "PU" are the volume percentage of the PU with respect to the fiber substrate.

TABLE 3

| | Comp. Ex. 5 | Example 11 | Example 12 | Example 13 | Example 14 | Example 15 | Comp. Ex. 6 |
|---|---|---|---|---|---|---|---|
| Resin | PP | | | | | | EP |
| PU | PU=0 | PU=10 | PU=13 | PU=24 | PU=30 | PU=35 | PU=0 |
| Displacement (mm) | Load (N) | | | | | | |
| 0.0 | 0 | 0 | 0 | 0 | 0 | 0 | 0 |
| 0.5 | 4 | 5 | 7 | 8 | 8 | 7 | 4 |
| 1.0 | 9 | 11 | 17 | 17 | 17 | 14 | 8 |
| 1.5 | 13 | 17 | 25 | 26 | 27 | 24 | 13 |
| 2.0 | 17 | 21 | 32 | 33 | 33 | 30 | 17 |
| 2.5 | 21 | 24 | 35 | 37 | 37 | 32 | 22 |
| 3.0 | 23 | 26 | 38 | 39 | 39 | 33 | 26 |
| 3.5 | 26 | 29 | 41 | 43 | 43 | 33 | 30 |
| 4.0 | 28 | 31 | 45 | 47 | 47 | 34 | 34 |
| 4.5 | 30 | 33 | 47 | 47 | 47 | 34 | 38 |
| 5.0 | 32 | 35 | 48 | 49 | 49 | 35 | 42 |
| 5.5 | 33 | 36 | 50 | 50 | 50 | 35 | 46 |
| 6.0 | 34 | 37 | 52 | 53 | 52 | 34 | 50 |
| 6.5 | 35 | 39 | 54 | 54 | 55 | 34 | 53 |
| 7.0 | 36 | 39 | 55 | 55 | 55 | 34 | 56 |
| 7.5 | 36 | 38 | 53 | 55 | 55 | 33 | 58 |
| 8.0 | 36 | 38 | 52 | 55 | 55 | 31 | 59 |

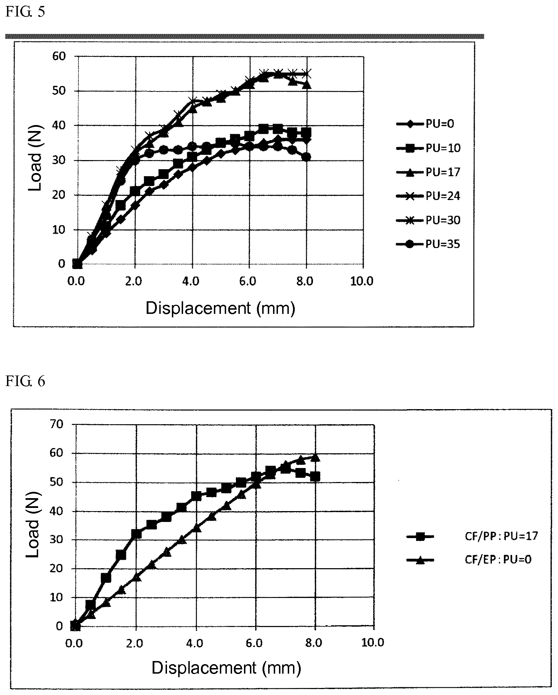

FIG. 5 is a graph showing bending load-displacement properties obtained by the above-mentioned bending test of the glass fiber woven fabric composite material in which the glass fiber was used as the fiber substrate and in which the PP was used as the matrix resin. As clearly shown in FIG. 5, by adding the PU, the bending load with respect to the displacement is increased, the linear region (modulus range) from zero point in a relationship of the bending load and the displacement becomes clear and long, and the composite material can resist the load after the maximum load is developed. That is, the fiber-reinforced composite materials containing the PP as the matrix resin show ductile fracture behavior. In particular, when the added amount of the PU is 10 vol% or more with respect to the volume of the fiber substrate, the composite material clearly shows the behavior. Further, when the added amount of the PU is 17 vol% or more, the composite material remarkably shows the behavior. Therefore, the added amount of the PU is preferably from 10 to 35 vol% with respect to the volume of the carbon fiber substrate, is more preferably from 10 to 30 vol%, and is further preferably from 17 to 30 vol%. When the added amount of the PU is 35 vol% with respect to the volume of the glass fiber substrate, the mechanical properties may be decreased in some conditions.

FIG. 6 is a graph showing a comparison between bending load-displacement properties in the case of which the glass fiber was used as the fiber substrate and in which the PP or the EP was used as the matrix resin. As clearly shown in FIG. 6, the fiber-reinforced composite material containing the PP with the predetermined amount of the PU as the matrix resin has almost the same mechanical properties as the corresponding material containing the epoxy resin as the matrix resin.

As clearly shown in TABLES 1-3 and FIGS. 1-6, the behaviors of the bending load-displacement properties of the fiber-reinforced composite material are nearly the same in the case of which the fiber substrate is the carbon fiber, the aramid fiber, or the glass fiber.

As a fiber used as a material for a yarn bundle of the fiber substrate, a carbon fiber manufactured by Toray Industries, Inc. (TORAYCA T-300-12000, unit weight: 0.80 g/m, 0.45 cm$^3$/m), an aramid fiber manufactured by Toray Industries, Inc. and Du Pont (Kevlar 29-3300 dtx, unit weight: 0.33 g/m, 0.23cm$^3$/m), and a glass fiber manufactured by Nitto Boseki Co., Ltd. (RS440 RR-520, unit weight: 0.44g/m, 0.18cm$^3$/m) were used. The cross-sectional area of the fiber substrate using the carbon fiber is 0.0075 cm$^2$, the cross-sectional area of the fiber substrate using the aramid fiber is 0.0038 cm$^2$, and the cross-sectional area of the fiber substrate using the glass fiber is 0.0030 cm$^2$. In each of the yarn bundle of the fiber substrate, the water-dispersed polyurethane resin manufactured by DKS Co. Ltd. (SUPERFLEX 130, non-yellowing type, ether based, the average particle size: 0.03 $\mu$m) as the thermoplastic resin filler was immersed, and it was dried at 180°C for 2 min to form a resin-filled substrate in which the resin was added in 20 vol% with respect to the volume of the fiber substrate.

Fiber-reinforced composite materials using the carbon fiber, the aramid fiber, or the glass fiber were produced by coating the resin-filled substrate with a heat-melted polypropylene (PP) as the matrix resin by a known extrusion process, and by cooling the matrix resin to make the matrix resin and the resin-filled substrate adhere to each other (Examples 16 to 18). The added amount of the PP is 60 vol% with respect to the fiber substrate.

As Comparative Examples, fiber-reinforced thermoplastic resin composite materials were produced under the same condition and the same shape as that in the Examples except that a yarn bundle of a fiber substrate without adding a PU was used (Comparative Examples 7, 9 and 11). Additionally, as other Comparative Examples, fiber-reinforced room temperature-curable composite materials were produced under the same condition and the same shape as that in the Examples except that a room temperature-curable epoxy resin (ASAHIBOND 702) was immersed in a fiber substrate without adding a polyurethane, and that it was cured at room temperature for 1 week (Comparative Examples 8, 10 and 12).

The above-mentioned fiber-reinforced composite material was disposed in a metal mold having an opening in the top thereof with a width of 12 mm, a thickness of 2.5 mm, and a length of 350 mm. The number of the fiber-reinforced composite material disposed in the metal mold is 40 for the carbon fiber, 79 for the aramid fiber, or 100 for the glass fiber. A metal plate was put on the top of the metal mold and was set in a hot press to perform molding under pressure at 200°C. After cooling it, both edges of each fiber-reinforced composite materials were cut with a diamond cutter to form a test sample having a length of 100 mm. Bending test was performed according to ASTM 790 under the following measurement conditions.

Crosshead speed: 10 mm/min
Distance between spans: 50 mm

TABLE 4 shows bending load-displacement properties obtained by the bending test of fiber woven fabric composite material in which the above-mentioned carbon fiber, the above-mentioned aramid fiber, or the above-mentioned glass fiber was used as the fiber substrate, in which the polyurethane was added or not added, and in which the PP or the EP was used as the matrix resin. The numbers in the column "PU" are the volume percentage of the PU with respect to the fiber substrate.

TABLE 4

| | Comp. Ex. 7 | Example 16 | Comp. Ex. 8 | Comp. Ex. 9 | Example 17 | Comp. Ex. 10 | Comp. Ex. 11 | Example 18 | Comp. Ex. 12 |
|---|---|---|---|---|---|---|---|---|---|
| Fiber | Carbon Fiber | | | Aramid Fiber | | | Glass Fiber | | |
| Added Amount of PU | 0 | 20 | 0 | 0 | 20 | 0 | 0 | 20 | 0 |
| Matrix Resin | PP | PP | EP | PP | PP | EP | PP | PP | EP |
| Bending Displacement (mm) | Load (N) | | | | | | | | |
| 0.0 | 0 | 0 | 0 | 0 | 0 | 0 | 0 | 0 | 0 |
| 0.5 | 18 | 45 | 42 | 9 | 26 | 24 | 12 | 21 | 20 |
| 1.0 | 36 | 98 | 90 | 21 | 58 | 54 | 27 | 51 | 52 |
| 1.5 | 66 | 152 | 141 | 39 | 91 | 84 | 39 | 75 | 80 |
| 2.0 | 99 | 196 | 192 | 60 | 120 | 114 | 51 | 96 | 96 |
| 2.5 | 126 | 250 | 243 | 75 | 151 | 147 | 63 | 105 | 108 |
| 3.0 | 150 | 298 | 294 | 90 | 186 | 177 | 69 | 114 | 120 |
| 3.5 | 168 | 321 | 330 | 102 | 192 | 198 | 78 | 123 | 127 |
| 4.0 | 183 | 330 | 336 | 111 | 202 | 201 | 84 | 135 | 138 |
| 4.5 | 198 | 342 | 325 | 120 | 208 | 183 | 90 | 141 | 140 |
| 5.0 | 210 | 354 | 303 | 126 | 213 | 150 | 96 | 144 | 126 |
| 5.5 | 222 | 357 | 96 | 132 | 213 | 57 | 99 | 150 | 100 |
| 6.0 | 231 | 357 | 40 | 138 | 213 | 41 | 102 | 156 | 62 |
| 6.5 | 240 | 357 | 31 | 144 | 213 | 32 | 105 | 162 | 38 |
| 7.0 | 246 | 360 | 25 | 147 | 216 | 20 | 108 | 165 | 25 |
| 7.5 | 252 | 360 | 20 | 150 | 216 | 15 | 108 | 159 | 20 |
| 8.0 | 258 | 357 | 15 | 156 | 213 | 13 | 108 | 156 | 18 |

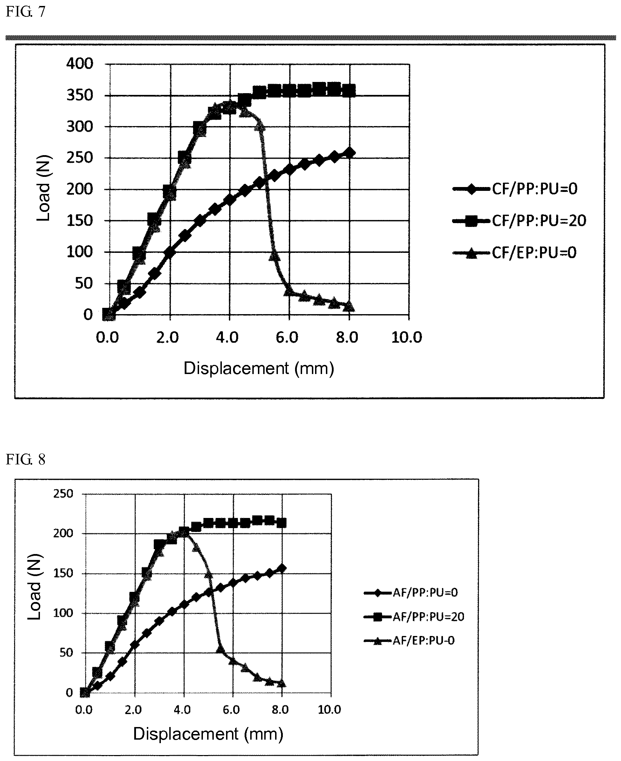

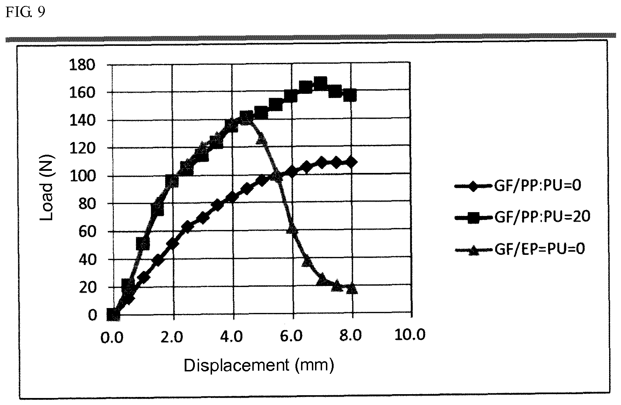

FIG. 7 is a graph showing bending load-displacement properties obtained by the above-mentioned bending test of the carbon fiber woven fabric composite material in which the carbon fiber was used as the fiber substrate, in which the EP or the PP was used as the matrix resin, and in which the polyurethane was added or not added when the matrix resin was EP. FIG. 8 is a graph showing bending load-displacement properties obtained by the above-mentioned bending test of the aramid fiber woven fabric composite material in which the aramid fiber was used as the fiber substrate, in which the EP or the PP was used as the matrix resin, and in which the polyurethane was added or not added when the matrix resin was EP. FIG. 9 is a graph showing bending load-displacement properties obtained by the above-mentioned bending test of the glass fiber woven fabric composite material in which the glass fiber was used as the fiber substrate, in which the EP or the PP was used as the matrix resin, and in which the polyurethane was added or not added when the matrix resin was EP.

As clearly shown in FIGS. 7 to 9, by adding the PU, the bending load with respect to the displacement is increased, the linear region (modulus range) from zero point in a relationship of the bending load and the displacement becomes clear and long, and the composite material can resist the load after the maximum load is developed. That is, the fiber-reinforced composite materials containing the PP as the matrix resin show ductile fracture behavior. The fiber-reinforced composite material containing the PP with the predetermined amount of the PU as the matrix resin has almost the same fracture properties below the limit of elasticity as the corresponding material containing the EP as the matrix resin. When the load is over the maximum load, the load of the fiber-reinforced composite material containing the EP as the matrix resin is rapidly decreased (brittle fracture). In contrast, the fiber-reinforced composite material containing the PP as the matrix resin shows ductile fracture behavior, in which the load is gradually increased even when the load is over the limit of elasticity. It shows that the carbon fiber-reinforced composite material containing a polyurethane is a durable material that resists serious fracture, and that the material is an ideal constructional material.

INDUSTRIAL APPLICABILITY

The fiber-reinforced thermoplastic resin composite material having no voids can be easily produced and the production time can be decreased by immersing an aqueous resin dispersion produced by dispersing thermoplastic resin particles in an aqueous medium in a fiber substrate and by drying it in order to fill spaces between fibers in the fiber substrate with the thermoplastic resin, and thereafter by disposing the fiber substrate between matrix resins of the thermoplastic resin to produce the fiber-reinforced composite material. Accordingly, a fiber-reinforced composite material having improved mechanical properties can be surely provided. The material can contribute to the weight reduction and the strength improvement of various products such as automobiles, and the material can be used as a material for various products.

**Claims**

1. A resin-laminated substrate, comprising:

   a resin-filled substrate formed by filling spaces between fibers in a fiber substrate with a thermoplastic polyurethane filler; and
   a matrix resin layer composed of a thermoplastic resin, which is disposed on the surface of the resin-filled substrate;
   wherein the added amount of the thermoplastic polyurethane filler to the fiber substrate is from 10 to 30 vol% with respect to the volume of the fiber substrate.

2. A resin-laminated substrate, comprising:

   a sheet of a resin-filled substrate formed by filling spaces between fibers in a sheet of a fiber substrate with a thermoplastic polyurethane filler; and
   a matrix resin composed of a thermoplastic resin, which is laminated on the sheet of the resin-filled substrate;
   wherein the added amount of the thermoplastic polyurethane filler to the fiber substrate is from 10 to 30 vol% with respect to the volume of the fiber substrate.

3. A resin-laminated substrate, comprising:

   a strand of a resin-filled substrate formed by filling spaces between fibers in a yarn bundle of a fiber substrate with a thermoplastic polyurethane filler; and
   a matrix resin layer composed of a thermoplastic resin, which is disposed on the surface of the strand of the resin-filled substrate;

wherein the added amount of the thermoplastic polyurethane filler to the fiber substrate is from 10 to 30 vol% with respect to the volume of the fiber substrate.

4. A fiber-reinforced composite material formed by using the resin-laminated substrate according to any one of claims 1 to 3.

5. A method for producing a resin-laminated substrate, comprising:

applying an aqueous resin dispersion to a fiber substrate, the aqueous resin dispersion being obtained by dispersing thermoplastic polyurethane filler particles in an aqueous medium;

removing the aqueous medium by drying process to form a resin-filled substrate, the fiber substrate being filled with the thermoplastic polyurethane filler by filling spaces between fibers in the fiber substrate with the thermoplastic polyurethane filler particles in an amount of 10 to 30 vol% with respect to the volume of the fiber substrate; and

stacking a matrix resin layer on the surface of the resin-filled substrate to form an integrated article of the resin-filled substrate and the matrix resin.

6. A method for producing a resin-laminated substrate, comprising:

applying an aqueous resin dispersion to a sheet of a fiber substrate, the aqueous resin dispersion being obtained by dispersing thermoplastic polyurethane filler particles in an aqueous medium;

removing the aqueous medium by drying process to form a resin-filled substrate, the fiber substrate being filled with the thermoplastic polyurethane filler by filling spaces between fibers in the fiber substrate with the thermoplastic polyurethane filler particles in an amount of 10 to 30 vol% with respect to the volume of the fiber substrate; and

laminating the resin-filled substrate and a matrix resin and heating it under pressure to form an integrated article of the resin-filled substrate and the matrix resin.

7. A method for producing a resin-laminated substrate, comprising:

applying an aqueous resin dispersion to a yarn bundle of a fiber substrate, the aqueous resin dispersion being obtained by dispersing thermoplastic polyurethane filler particles in an aqueous medium;

removing the aqueous medium by drying process to form a strand of a resin-filled substrate, the fiber substrate being filled with the thermoplastic polyurethane filler by filling spaces between fibers in the fiber substrate with the thermoplastic polyurethane filler particles in an amount of 10 to 30 vol% with respect to the volume of the fiber substrate; and

coating the surface of the strand of the resin-filled substrate with a matrix resin to form an integrated article of the resin-filled substrate and the matrix resin.

8. A method for producing a fiber-reinforced composite material, comprising:

laminating or aligning the resin-laminated substrate formed by the method for producing a resin-laminated substrate according to any one of claims 5 to 7; and

heating it under pressure to concurrently form it into any shape.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
| --- |
| PCT/JP2015/072802 |

A.    CLASSIFICATION OF SUBJECT MATTER
*B32B27/40*(2006.01)i, *B32B5/28*(2006.01)i, *C08J5/04*(2006.01)i

According to International Patent Classification (IPC) or to both national classification and IPC

B.    FIELDS SEARCHED

Minimum documentation searched (classification system followed by classification symbols)
B32B1/00-43/00, B29B11/16, B29B15/08-15/14, C08J5/04-5/10, C08J5/24,
C08J5/00-5/02, C08J5/12-5/22

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| X | JP 62-248629 A   (Monsanto Co.), 29 October 1987 (29.10.1987), claims 1, 8, 21; page 4, upper left column, line 20 to upper right column, line 5; page 5, lower left column, lines 4 to 5; page 6, upper right column, lines 5 to 7 & EP 238472 A2 claims 1, 8, 21; column 3, lines 6 to 11; column 4, lines 60 to 61; column 6, lines 5 to 7 & KR 10-1990-0003805 B1 | 1-8 |
| X | JP 8-12769 A   (Bando Chemical Industries, Ltd.), 16 January 1996 (16.01.1996), paragraphs [0016], [0038]; examples 2, 3, 5, 6; comparative example 3 (Family: none) | 1-8 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 November 2015 (06.11.15) | 17 November 2015 (17.11.15) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/072802

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 62-270634 A  (Mitsuboshi Belting Ltd.),<br>25 November 1987 (25.11.1987),<br>claim 1; example 1; page 3, upper left column,<br>line 20 to upper right column, line 3<br>(Family: none) | 1-4<br>5-8 |
| X<br>A | JP 62-253630 A  (Mitsuboshi Belting Ltd.),<br>05 November 1987 (05.11.1987),<br>claim 1; example 1; page 2, lower right column,<br>lines 11 to 14<br>(Family: none) | 1-4<br>5-8 |
| A | WO 2008/137218 A1  (HONEYWELL INTERNATIONAL<br>INC.),<br>13 November 2008 (13.11.2008),<br>page 31, lines 14 to 15<br>& JP 2010-532280 A      & US 2013/0115839 A1<br>& EP 2125360 A          & CN 101678636 A | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5132863 A
- JP 2006124847 A
- JP 2011021281 A
- JP 2011214175 A